# EUROPÄISCHE PATENTSCHRIFT

(11) **EP 3 793 868 B1**
(45) Veröffentlichungstag und Bekanntmachung des Hinweises auf die Patenterteilung: **08.09.2021**
(21) Anmeldenummer: 19748480.1
(22) Anmeldetag: 18.07.2019
(51) Int. Cl.: B60R 16/00, G09C 1/00, H04L 9/32

(54) **EIN VERFAHREN ZUM BETREIBEN EINER STEUERVORRICHTUNG**
METHOD FOR OPERATING A CONTROL APPARATUS
PROCÉDÉ POUR FAIRE FONCTIONNER UN DISPOSITIF DE COMMANDE

(30) Priorität: 22.08.2018 DE 102018214158
(43) Veröffentlichungstag der Anmeldung: 24.03.2021
(73) Patentinhaber: Audi AG, 85045 Ingolstadt (DE)
(72) Erfinder: LERZER, Jürgen, 92318 Neumarkt (DE); GRUBER, Hans-Georg, 85049 Ingolstadt (DE); DALKE, Christoph, 85110 Kipfenberg (DE)
(86) Internationale Anmeldenummer: PCT/EP2019/069313
(87) Internationale Veröffentlichungsnummer: WO 2020/038664

(56) Entgegenhaltungen:
- EP-A1- 2 966 806
- WO-A1-2017/125144
- WO-A1-2017/214864
- US-B1- 8 751 827

## Beschreibung

Die Erfindung betrifft ein Verfahren zum Betreiben einer Steuervorrichtung.

In Kraftfahrzeugen werden Informationssysteme verwendet, welche sich in ihrem Funktionsumfang voneinander unterscheiden. Diese Informationssysteme gestatten eine Bedienung von Funktionen des Kraftfahrzeugs und eine Ausgabe von Navigations- und Kraftfahrzeuginformationen. Oft ermöglichen Informationssysteme eine Wiedergabe von Mediendateien, weshalb sie auch als Entertainment- oder Infotainmentsysteme bezeichnet werden. Wird zur Bereitstellung eines bestimmten Funktionsumfangs ein individuelles Informationssystem mit spezifischen Komponenten verwendet, führt dies zu einem erhöhten Entwicklungsaufwand. Dies ist auf die Entwicklung der jeweiligen Hardware, die Abstimmung der einzelnen Komponenten und die Bereitstellung der zugehörigen Treiber zurückzuführen. Ein zusätzlicher Aufwand ergibt sich, wenn Informationssysteme für verschiedene Fahrzeugtypen bereitgestellt werden sollen, welche sich in ihrer jeweiligen Ausstattung voneinander unterscheiden. Dies führt bei der Gestaltung des Informationssystems und der Bereitstellung der jeweiligen Software für den Betrieb des Informationssystems zu einen zusätzlichen Anpassungsbedarf.

Um den Entwicklungsaufwand und den Abstimmungsbedarf bei der Bereitstellung von Softwareupdates zu reduzieren ist es vorteilhaft einheitliche Komponenten zu verwenden und hiermit einen identischen Unterbau für verschiedene Ausführungsformen der Informationssysteme bereitzustellen.

Dies verringert die Anzahl der Varianten und ermöglicht somit eine Reduzierung des Wartungs- und des Entwicklungsaufwands. Ein weiterer Vorteil besteht darin, dass eine einheitliche Software für unterschiedliche Informationssysteme verwendet werden kann. Der Funktionsumfang eines jeweiligen Informationssystems wird über eine Anpassung der jeweiligen Bauteile erreicht. Hierbei weist ein jeweiliges Bauteil in seiner Grundkonfiguration mehrere Schaltkreisbereiche auf, welche zusammen ein Maximum an Funktionen bereitstellen. Für eine Anpassung des Bauteils an einen gewünschten Funktionsumfang eines Informationssystems werden in dem Bauteil Schaltkreisbereiche, die einer nicht gewünschten Funktion zugeordnet sind, deaktiviert. Dies erfolgt beispielsweise indem Leitungen, welche den zu deaktivierenden Schaltkreisbereich anbinden, gezielt durchtrennt werden.

Nachteilig an dieser Vorgehensweise ist die Tatsache, dass die Anpassung der Hardware irreversibel ist. Dies führt dazu, dass es nicht möglich ist, einen deaktivierten Schaltkreisbereich nachträglich zu reaktivieren. Eine Reaktivierung kann erforderlich sein, wenn sich beispielsweise die Anforderungen an das jeweilige Bauteil verändern. Eine Veränderung der Anforderungen kann beispielsweise aufgrund eines Austauschs von Fahrzeugkomponenten oder einer Funktionserweiterung des Informationssystems vorliegen.

In der US 2016/0185221 A1 ist ein nachrüstbares Fahrzeug beschrieben. Das Fahrzeug umfasst mehrere Anschlüsse zur Anbringung von Komponenten. Das Fahrzeug ist dazu eingerichtet, Anweisungen zum Betrieb einer neuen Komponente von einer externen Quelle abzurufen.

In der US 9,417,834 B2 ist ein Fahrzeug offenbart, welches eine oder mehrere Verarbeitungseinheiten aufweist. Die jeweilige Verarbeitungseinheit ist dazu eingerichtet, austauschbare Funktionseinheiten bereitzustellen.

Das Dokument WO 2017/125144 A1 offenbart ein Verfahren zum Betreiben einer Steuervorrichtung einer Infotainmentvorrichtung eines Kraftfahrzeugs zur Freischaltung von Funktionen, wobei die Steuervorrichtung einen integrierten Schaltkreis umfasst.

Es ist eine Aufgabe der Erfindung, eine nachträgliche Veränderung der Kraftfahrzeugelektronik zu ermöglichen.

Die Aufgabe wird durch das Verfahren gemäß Anspruch 1 gelöst. Durch eine Funktionskontrolleinheit wird bei einem vorbestimmten Ansteuerungssignal zumindest ein Eintrag, betreffend einen Freischaltzustand einer jeweiligen Schaltungsfunktion und/oder eines jeweiligen Schaltungsbereichs des integrierten Schaltkreises einer Funktionsregistereinheit, verändert. Dabei erfolgt die Veränderung nur falls eine vorbestimmte, auf einer kryptographischen Methode basierenden Authentitätsprüfung, eine Quelle des Ansteuerungssignals als berechtigt bestätigt. Durch den integrierten Schaltkreis wird die jeweilige Schaltungsfunktion und/oder der jeweilige Schaltungsbereich gemäß dem zumindest einen Eintrag der Funktionsregistereinheit für eine Nutzung freigeschaltet.

Vorteilhafte Weiterbildungen der Erfindung ergeben sich durch die Merkmale der abhängigen Patentansprüche, die folgende Beschreibung sowie die Figuren.

Durch die Erfindung ergibt sich der Vorteil, dass der Funktionsumfang des integrierten Schaltkreises durch das Ansteuerungssignal angepasst werden kann.

Es kann beispielsweise vorgesehen sein, dass die Steuervorrichtung eine SOC-Einheit ist (System on a Chip / Ein Chip System), welche den integrierten Schaltkreis aufweist. Die Steuervorrichtung kann die Funktionsregistereinheit, wobei es sich beispielsweise um einen Abschnitt des integrierten Schaltkreises handeln kann, umfassen. Die Funktionsregistereinheit kann dazu eingerichtet sein, den zumindest einen Eintrag zu speichern. In dem Eintrag kann definiert sein, ob die dem Eintrag zugeordnete jeweilige Schaltungsfunktion und/oder der jeweilige Schaltungsbereich des integrierten Schaltkreises freigeschaltet ist. Gemäß dem zumindest einen Eintrag kann der integrierte Schaltkreis den jeweiligen Schaltungsbereich oder die jeweilige Schaltungsfunktion aktiviert oder deaktiviert sein. Die Steuervorrichtung umfasst auch die Funktionskontrolleinheit, wobei es sich um einen Bereich des integrierten Schaltkreises handeln kann. Die Funktionskontrolleinheit kann mittels des vorbestimmten Ansteuerungssignals angesteuert werden, um den zumindest einen Eintrag in der Funktionsregistereinheit zu verändern. Dabei kann es vorgesehen sein, dass der Eintrag in der Funktionsregistereinheit durch die Funktionskontrolleinheit nur verändert wird, wenn die Quelle des Ansteuerungssignals als berechtigt bestätigt wird. Die Berechtigung der Quelle kann mittels des kryptographischen Verfahrens durch die Authentitätsprüfung überprüft werden. So kann es vorgesehen sein, dass das Steuerungssignal eine Prüfsumme und/oder eine digitale Signatur aufweisen muss, damit die Änderung des Eintrags durch die Funktionskontrolleinheit erfolgen kann. Die Quelle kann beispielsweise eine Steuereinheit der Steuervorrichtung sein. In diesem Fall kann es vorgesehen sein, dass diese Steuereinheit dazu eingerichtet ist, die Funktionskontrolleinheit anzusteuern. Die Quelle kann auch ein Zentralrechner sein, welcher außerhalb der Steuervorrichtung angeordnet sein kann. Es kann vorgesehen sein, dass beispielsweise nur ein Zentralrechner eines Herstellers der Steuereinheit auf die Funktionskontrolleinheit zugreifen kann.

Zu der Erfindung gehören auch optionale Weiterbildungen, durch deren Merkmale sich zusätzliche Vorteile ergeben.

Eine Weiterbildung der Erfindung sieht vor, dass nur die Funktionskontrolleinheit dazu eingerichtet ist, den zumindest einen Eintrag der Funktionsregistereinheit zu verändern.

Mit anderen Worten ist die Änderung des zumindest einen Eintrag der Funktionsregistereinheit nur durch die Funktionskontrolleinheit der jeweiligen Steuervorrichtung möglich.

Dadurch ergibt sich der Vorteil, dass keine Umgehung der Authentitätsprüfung durch ein anderes Bauteil der Steuervorrichtung möglich ist.

Es kann beispielsweise vorgesehen sein, dass die Steuervorrichtung so eingerichtet ist, dass ein Eingabeanschluss der Funktionsregistereinheit, welcher für eine Veränderung des zumindest einen Eintrags angesteuert werden muss, nur mit einem Ausgang der Funktionskontrolleinheit verbunden ist. Somit können Signale an die Funktionsregistereinheit nur von der Funktionskontrolleinheit empfangen werden. Alternativ dazu kann es beispielsweise vorgesehen sein, dass eine Änderung des zumindest einen Eintrags der Funktionsregistereinheit nur mittels einer Ansteuerung der Funktionsregistereinheit nach einem vorbestimmten Protokoll möglich ist, wobei die Funktionskontrolleinheit das einzige Element der Steuervorrichtung ist, welches dazu eingerichtet ist, die Funktionsregistereinheit mittels des vorbestimmten Protokolls anzusteuern.

Eine Weiterbildung der Erfindung sieht vor, dass die Steuervorrichtung dazu eingerichtet ist, die Authentitätsprüfung mittels eines asymmetrischen Schlüsselpaares oder einer Blockchain durchzuführen.

Mit anderen Worten ist die Steuervorrichtung dazu eingerichtet, die Berechtigung der Quelle des Ansteuerungssignals mittels einer Authentitätsprüfung zu überprüfen, wobei die Authentitätsprüfung ein kryptographischen Verfahren umfasst, welches auf dem asymmetrischen Schlüsselpaar oder der Blockchain basiert.

Dadurch ergibt sich der Vorteil, dass eine Beeinträchtigung der Funktionsfähigkeit der Steuervorrichtung aufgrund einer Ansteuerung unberechtigter Quellen vermieden werden kann.

Es kann beispielsweise vorgesehen sein, dass die Authentitätsprüfung auf dem RSA-Verfahren basiert. In der berechtigten Quelle kann ein privater Schlüssel gespeichert sein, mit welchem die berechtigte Quelle eine digitale Signatur erzeugen und dem Ansteuerungssignal beifügen kann. Somit kann verifiziert werden, dass die berechtigte Quelle ein Urheber des Ansteuerungssignals ist. Um die digitale Signatur überprüfen zu können, kann ein öffentlicher Schlüssel, welcher dem privaten Schlüssel zugeordnet ist, erforderlich sein. Der private Schlüssel und der öffentliche Schlüssel können das asymmetrische Schlüsselpaar bilden. Der öffentliche Schlüssel kann in der Funktionskontrolleinheit gespeichert sein. Es kann beispielsweise vorgesehen sein, dass die Funktionskontrolleinheit dazu eingerichtet ist, die digitale Signatur, welche dem Ansteuerungssignal beigefügt ist, mittels des öffentlichen Schlüssels zu überprüfen. Ist die Überprüfung der digitalen Signatur erfolgreich, kann die Funktionskontrolleinheit den entsprechenden Eintrag der Funktionsregistereinheit verändern. Ist die Überprüfung nicht erfolgreich, so kann dies bedeuten, dass das Ansteuerungssignal aus einer nicht berechtigten Quelle kommt. In diesem Fall kann es vorgesehen sein, dass das Ansteuerungssignal durch die Steuervorrichtung nicht weiterverarbeitet wird und keine Änderung des Eintrags erfolgt.

Eine Weiterbildung der Erfindung sieht vor, dass die Steuervorrichtung ein nichtwiederbeschreibbares Speicherelement und/oder eine PUF-Einheit zur Speicherung eines Identifikationswertes der Steuervorrichtung umfasst.

Mit anderen Worten weist die Steuervorrichtung das nichtwiederbeschreibbare Speicherelement und/oder die PUF-Einheit auf, wobei diese dazu eingerichtet sind, den Identifikationswert der Steuervorrichtung zu speichern.

Dadurch ergibt sich der Vorteil, dass die jeweilige Steuervorrichtung mittels des zugewiesenen Identifikationswertes eindeutig und nur durch physische Eingriffe veränderbar gekennzeichnet ist.

Es kann beispielsweise vorgesehen sein, dass die Steuervorrichtung einen ROM-Baustein (Read only Memory) als nichtwiederbeschreibbares Speicherelement umfasst, wobei in dem Speicherelement der Identifikationswert gespeichert ist. Der Identifikationswert kann nachträglich nicht veränderbar sein. Als Alternative dazu oder zusätzlich dazu kann die Steuervorrichtung die PUF-Einheit (Physical Unclonable Functions) aufweisen, wobei es sich um eine physikalisch nicht-klonbare Funktionseinheit handeln kann. Dabei kann es sich um ein Bauteil oder einen Schaltkreis handeln, welcher ein eindeutiges Merkmal als Identifikationswert aufweisen kann. Dieses Merkmal kann auf fertigungsbedingten Eigenheiten der Einheit basieren, welche die jeweilige PUF-Einheit von baugleichen PUF-Einheiten unterscheidet. Somit kann die PUF-Einheit zur eindeutigen Identifikation der Steuervorrichtung verwendet werden.

Eine Weiterbildung der Erfindung sieht vor, dass die Steuervorrichtung eine Netzwerkschnittstelle umfasst, und die Funktionskontrolleinheit dazu eingerichtet ist, das vorbestimmte Ansteuerungssignal über die Netzwerkschnittstelle zu empfangen.

Mit anderen Worten weist die Steuervorrichtung die Netzwerkschnittstelle auf, welche dazu eingerichtet ist, das vorbestimmte Ansteuerungssignal für die Funktionskontrolleinheit zu empfangen.

Eine Weiterbildung der Erfindung sieht vor, dass die Funktionskontrolleinheit dazu eingerichtet ist, bei einem Empfang des Anfragesignals den zumindest einen Eintrag der Funktionsregistereinheit auszulesen und als Ausgabesignal zu versenden.

Mit anderen Worten ist die Funktionskontrolleinheit dazu eingerichtet, das Anfragesignal zu empfangen und daraufhin den in dem zumindest einen Eintrag vorgegebenen Freischaltungszustand in der Funktionsregistereinheit auszulesen. Die Funktionskontrolleinheit ist dazu eingerichtet, das Ausgabesignal zu generieren und zu versenden, wobei in dem Ausgabesignal enthalten ist, ob der jeweilige Schaltungsbereich oder die jeweilige Schaltungsfunktion durch den zumindest einen Eintrag freigeschaltet ist.

Dadurch ergibt sich der Vorteil, dass eine Abfrage der Einträge der Funktionsregistereinheit aus der Steuervorrichtung für externe Vorrichtungen ermöglicht ist.

Es kann beispielsweise vorgesehen sein, dass ein Zentralrechner das Anfragesignal an die Steuervorrichtung versendet und dieses durch die Funktionskontrolleinheit empfangen wird. Das Anfragesignal kann Daten über die betreffenden Einträge umfassen, welche durch die Funktionskontrolleinheit aus der Funktionsregistereinheit ausgelesen werden sollen. Die Funktionskontrolleinheit kann die jeweiligen Einträge aus der Funktionsregistereinheit abfragen und das Ausgabesignal erzeugen. Das Ausgabesignal kann für ein Protokoll des Zentralrechners vorgesehen sein. Das Ausgabesignal wird durch die Funktionskontrolleinheit an den Zentralrechner übermittelt, wobei das Ausgabesignal die angefragten Einträge umfassen kann.

Eine Weiterbildung der Erfindung sieht vor, dass die Funktionskontrolleinheit dazu eingerichtet ist, ein Rücksetzsignal an den jeweiligen Schaltungsbereich des integrierten Schaltkreises zu versenden, um den jeweiligen Schaltungsbereich neu zu starten.

Mit anderen Worten ist die Steuervorrichtung dazu eingerichtet, den jeweiligen Schaltungsbereich des integrierten Schaltkreises mittels des Rücksetzsignals neu zu starten.

Dadurch ergibt sich der Vorteil, dass der jeweilige Schaltungsbereich nach einer Änderung des jeweiligen Eintrags in der Funktionsregistereinheit durch die Funktionskontrolleinheit neu gestartet werden kann, damit eine Änderung umgesetzt werden kann.

Es kann beispielsweise vorgesehen sein, dass durch die Funktionskontrolleinheit der Eintrag der Funktionsregistereinheit, welcher dem jeweiligen Schaltungsbereich des integrierten Schaltkreises zugeordnet ist, verändert wird, um den jeweiligen Schaltungsbereich zu deaktivieren. Es kann möglich sein, dass die Änderung erfordert, dass der Schaltungsbereich neu gestartet wird, damit dieser gemäß dem neuen Eintrag freigeschaltet werden kann. Um dies zu ermöglichen, kann es vorgesehen sein, dass die Funktionskontrolleinheit nach einer Veränderung des jeweiligen Eintrags in der Funktionsregistereinheit das Rücksetzsignal an den jeweiligen Schaltungsbereich sendet. Der Schaltungsbereich kann bei einem Empfang des Rücksetzsignals neu starten und zu Beginn des Starts den jeweiligen Freischaltungszustand aus der Funktionsregistereinheit abrufen.

Eine Weiterbildung der Erfindung sieht vor, dass die Steuervorrichtung zumindest eine dezidierte Leitung zur Übertragung des Rücksetzsignals aufweist, welche die Funktionskontrolleinheit mit nur einem der Schaltungsbereiche des integrierten Schaltkreises verbindet.

Mit anderen Worten ist die Funktionskontrolleinheit über die dezidierte Leitung mit einer einzigen der Schaltungsbereiche des integrierten Schaltkreises verbunden. Die dezidierte Leitung ist dazu eingerichtet, das Rücksetzsignal an nur einen der Schaltungsbereiche des integrierten Schaltkreises zu übertragen.

Dadurch ergibt sich der Vorteil, dass für die Übertragung des Rücksetzsignals eine gesonderte Leitung bereitgestellt ist.

Es kann beispielsweise vorgesehen sein, dass die Funktionskontrolleinheit einen Anschluss aufweist, an welchem die Funktionskontrolleinheit das Rücksetzsignal ausgeben kann. Dieser Anschluss kann über die dezidierte Leitung mit einem der Schaltungsbereiche des integrierten Schaltkreises verbunden sein. Es kann vorgesehen sein, dass durch die dezidierte Leitung nur die Funktionskontrolleinheit und der eine Schaltungsbereich des integrierten Schaltkreises miteinander verbunden sind. Soll der Schaltungsbereich neu gestartet werden, kann es vorgesehen sein, dass die Funktionskontrolleinheit das Rücksetzsignal an dem Anschluss ausgibt, damit dieses über die dezidierte Leitung nur an den jeweiligen Schaltungsbereich gesendet wird.

Eine Weiterbildung der Erfindung sieht vor, dass die Funktionskontrolleinheit ein Ablaufregister zur Speicherung zumindest eines Ablaufeintrags, betreffend einen Ablauftermin oder einen Ablaufzeitraum des zumindest einen Eintrags der Funktionsregistereinheit, umfasst und dazu eingerichtet ist, eine aktuelle Uhrzeit und/oder ein aktuelles Datum zu ermitteln und bei einem Überschreiten des Ablauftermins oder des Ablaufzeitraums den zumindest einen Eintrag der Funktionsregistereinheit zu verändern.

Mit anderen Worten umfasst die Funktionskontrolleinheit das Ablaufregister, in welchem Ablaufeinträge gespeichert sind, wobei die Ablaufeinträge einen Ablauftermin oder einen Ablaufzeitraum des zumindest einen Eintrags der Funktionsregistereinheit aufweisen. Die Funktionskontrolleinheit ist dazu eingerichtet, die aktuelle Uhrzeit und/oder das aktuelle Datum zu ermitteln. Die Funktionskontrolleinheit ist dazu eingerichtet, den zumindest einen Eintrag der Funktionsregistereinheit, welchem der Ablaufeintrag zugewiesen ist, zu verändern. die Veränderung wird durchgeführt, wenn der Ablauftermin oder der Ablaufzeitraum durch die aktuelle Uhrzeit und/oder das aktuelle Datum überschritten wird.

Dadurch ergibt sich der Vorteil, dass Funktionen und/oder Schaltungsbereiche in Abhängigkeit einer Zeit freigeschaltet werden können.

Es kann beispielsweise vorgesehen sein, dass ein Eintrag, betreffend einen Freischaltungszustand eines Schaltungsbereichs, in der Funktionsregistereinheit gespeichert ist. Der Eintrag der Funktionsregistereinheit kann festlegen, dass der besagte Schaltungsbereich freigeschaltet ist. Dem Eintrag in der Registereinheit kann der jeweilige Ablaufeintrag in dem Ablaufregister zugeordnet sein. Der Ablaufeintrag kann den Ablauftermin und/oder den Ablaufzeitraum aufweisen. Die Funktionskontrolleinheit kann dazu eingerichtet sein, die aktuelle Uhrzeit und/oder das aktuelle Datum aus der Steuervorrichtung abzurufen. Die Funktionskontrolleinheit kann dazu eingerichtet sein, die aktuelle Uhrzeit und/oder das aktuelle Datum mit dem Ablauftermin und/oder dem Ablaufzeitraum zu vergleichen. Es kann vorgesehen sein, dass durch die Funktionskontrolleinheit der Eintrag in der Funktionsregistereinheit betreffend den Schaltungsbereich verändert wird, wenn der Ablauftermin oder der Ablaufzeitraum überschritten sind. Der Ablauftermin kann beispielsweise ein vorbestimmtes Datum und/oder eine Uhrzeit umfassen, zu welcher der Eintrag verändert werden soll. Der Ablaufzeitraum kann beispielsweise ein Zeitraum nach einem Zeitpunkt einer Veränderung des Eintrags durch die Funktionskontrolleinheit sein. Es kann vorgesehen sein, dass aufgrund des Ablaufs des Eintrags in der Funktionsregistereinheit durch die Funktionskontrolleinheit der Eintrag geändert wird, sodass der jeweilige Schaltungsbereich deaktiviert wird.

Eine Weiterbildung der Erfindung sieht vor, dass die Funktionskontrolleinheit einen Speicher aufweist und dazu eingerichtet ist, den zumindest einen Eintrag der Funktionsregistereinheit vor einem Verändern in dem Speicher zu speichern.

Mit anderen Worten ist die Funktionskontrolleinheit dazu eingerichtet, den zumindest einen Eintrag der Funktionsregistereinheit in einem Speicher der Funktionskontrolleinheit zu speichern, bevor der Eintrag in der Funktionsregistereinheit durch die Funktionskontrolleinheit geändert wird.

Dadurch ergibt sich der Vorteil, dass es möglich ist, den Eintrag nach einer Änderung auf seinen ursprünglichen Zustand zurückzusetzen.

Es kann beispielsweise vorgesehen sein, dass durch die Funktionskontrolleinheit ein Schaltungsbereich des Schaltkreises freigeschaltet werden soll. Die Funktionskontrolleinheit kann dazu eingerichtet sein, den zumindest einen Eintrag der Funktionsregistereinheit auszulesen und in dem Speicher zu speichern. Anschließend kann der Eintrag in der Funktionsregistereinheit verändert werden. Ist beispielsweise ein Zeitraum abgelaufen oder wird ein bestimmtes Ansteuerungssignal durch die Funktionskontrolleinheit empfangen, so kann es vorgesehen sein, dass durch die Funktionskontrolleinheit der Eintrag aus dem Speicher abgerufen wird. Der Eintrag der Funktionsregistereinheit wird entsprechend dem Eintrag in dem Speicher geändert. Somit kann der Eintrag auf seinen ursprünglichen Wert vor der Änderung zurückgesetzt werden.

Eine Weiterbildung der Erfindung sieht vor, dass die Funktionskontrolleinheit ein Profilspeicher zur Speicherung von zumindest zwei Profilen umfasst, wobei das jeweilige Profil zumindest einen Profileintrag umfasst. Ein Profil ist einer jeweiligen Kennung zugeordnet. Die Funktionskontrolleinheit ist dazu eingerichtet, bei einem Empfang der jeweiligen Kennung zumindest einen Eintrag der Funktionsregistereinheit gemäß dem zumindest einen Profileintrag des jeweiligen Profils zu ändern.

Mit anderen Worten weist die Funktionskontrolleinheit den Profilspeicher auf, in welchen zumindest zwei Profileinträge gespeichert sind. Das jeweilige Profil weist zumindest einen Profileintrag und eine Kennung auf. Die Funktionskontrolleinheit ist dazu eingerichtet, den zumindest einen Eintrag der Funktionsregistereinheit auf den zumindest einen Profileintrag des jeweiligen Profils zu ändern, wenn die Funktionskontrolleinheit die jeweilige Kennung empfängt, welche dem jeweiligen Profil zugeordnet ist.

Dadurch ergibt sich der Vorteil, dass mehrere Einträge mittels der Profile vorgegeben werden können.

Es kann beispielsweise vorgesehen sein, dass in dem Profilspeicher der Funktionskontrolleinheit Profile gespeichert sind, wobei ein jeweiliges Profil Profileinträge aufweist, welche definieren, wie die jeweiligen Einträge der Funktionsregistereinheit bei einem Auswählen des jeweiligen Profils, durch die Funktionskontrolleinheit geändert werden sollen. Einem jeweiligen Profil kann eine jeweilige Kennung zugeordnet sein, welche das jeweilige Profil identifiziert. Es kann vorgesehen sein, dass die Funktionskontrolleinheit dazu eingerichtet ist, die jeweilige Kennung zu empfangen. Gemäß der Profileinträge, des durch die Kennung identifizierten Profils werden die Einträge der Funktionsregistereinheit durch die Funktionskontrolleinheit verändert.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: ein mögliches Beispiel von einer Steuervorrichtung; und
- Fig. 2: eine mögliche Ausführungsform des erfindungsgemäßen Verfahrens.

Bei den im Folgenden erläuterten Ausführungsbeispielen handelt es sich um bevorzugte Ausführungsformen der Erfindung.

In den Figuren sind funktionsgleiche Elemente jeweils mit denselben Bezugszeichen versehen.

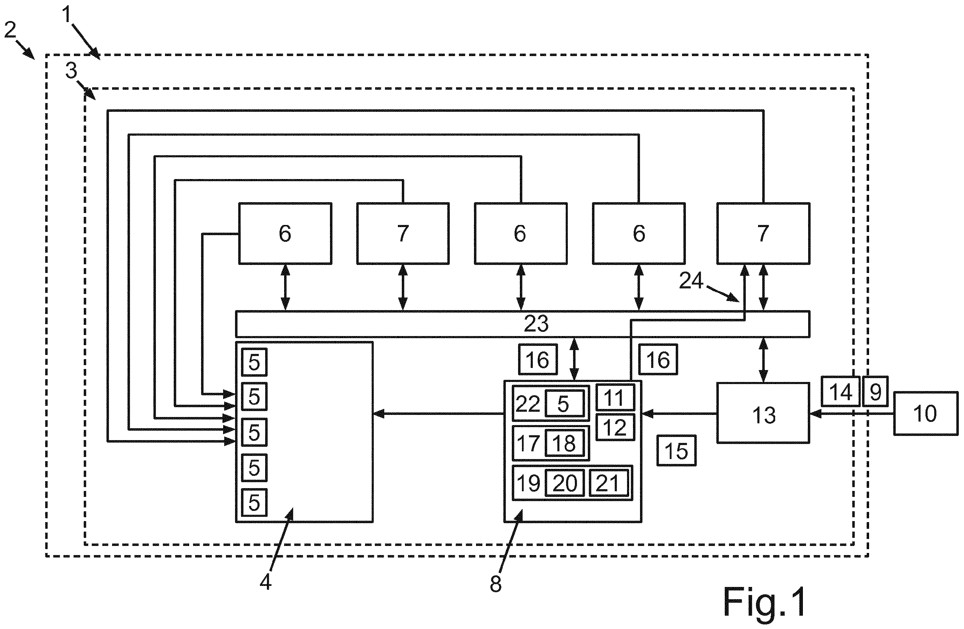

Fig. 1 zeigt ein Beispiel von einer Steuervorrichtung. Die Steuervorrichtung 1 kann beispielsweise in einem Kraftfahrzeug 2 angeordnet sein. Die Steuervorrichtung 1 kann den integrierten Schaltkreis 3 aufweisen. Die Steuervorrichtung 1 kann die Funktionsregistereinheit 4, in welcher die Einträge 5 gespeichert sein können, aufweisen. Der zumindest eine Eintrag 5 kann den Freischaltzustand der jeweiligen Schaltungsfunktion 6 und/oder des jeweiligen Schaltungsbereichs des integrierten Schaltkreises 7 festlegen. Der integrierte Schaltkreis 3 kann dazu eingerichtet sein, die jeweilige Schaltungsfunktion 6 und/oder den jeweiligen Schaltungsbereich 7 gemäß dem zumindest einen Eintrag 5 der Funktionsregistereinheit 4 für eine Nutzung freizuschalten. Die Steuervorrichtung 1 kann die Funktionskontrolleinheit 8 aufweisen, welche dazu eingerichtet sein kann, bei dem vorbestimmten Ansteuerungssignal 9 den zumindest einen Eintrag 5 der Funktionsregistereinheit 4 zu verändern. Dabei kann es vorgesehen sein, dass eine Veränderung des Eintrags 5 durch die Funktionskontrolleinheit 8 nur erfolgt, wenn mittels des vorbestimmten, auf einer kryptographischen Methode basierenden, Authentitätsprüfung des Ansteuerungssignals 9 die Quelle 10 des Ansteuerungssignals 9 als berechtigt bestätigt wird. Die Authentitätsprüfung kann beispielsweise mittels eines kryptographischen Verfahrens erfolgen, welches mittels eines asymmetrischen Schlüsselpaares durchgeführt wird. Es kann auch vorgesehen sein, dass die Authentitätsprüfung auf Grundlage eines Blockchainverfahrens erfolgt. Eine Weiterbildung der Erfindung sieht vor, dass die Funktionskontrolleinheit 8 ein nichtwiederbeschreibbares Speicherelement 11 und/oder eine PUF-Einheit 12 zur Speicherung eines Identifikationswertes der Steuervorrichtung 1 umfasst. Die Steuervorrichtung 1 kann eine Netzwerkschnittstelle 13 umfassen, welche dazu eingerichtet sein kann, einen Empfang des Ansteuerungssignals 9 für die Funktionskontrolleinheit 8 zu ermöglichen. Die Funktionskontrolleinheit 8 kann dazu eingerichtet sein, das Anfragesignal 14 zu empfangen. Das Anfragesignal 14 kann eine Aufforderung beinhalten, dass die Funktionskontrolleinheit 8 zumindest einen Eintrag 5 der Funktionsregistereinheit 4 ausliest und als Ausgabesignal 15 versendet. Das Ausgabesignal 15 kann beispielsweise beschreiben, welche Schaltungsfunktionen 6 oder Schaltungsbereiche 7 durch die Einträge 5 der Funktionsregistereinheit 4 freigeschaltet sind. Die Funktionskontrolleinheit 8 kann dazu eingerichtet sein, das Rücksetzsignal 16 an den jeweiligen Schaltungsbereich des integrierten Schaltkreises 7 zu übertragen, um diesen neu zu starten. Bei dem Rücksetzsignal 16 kann es sich beispielsweise um einen vorbestimmten Spannungswert handeln. Die Steuervorrichtung 1 kann das Ablaufregister 17 umfassen, welches zumindest einen Ablaufeintrag 18 aufweisen kann. Der Ablaufeintrag 18 kann beispielsweise einen Zeitpunkt und/oder ein Zeitraum festlegen. Der Ablaufeintrag 18 kann einem jeweiligen Eintrag 5 der Funktionsregistereinheit 4 zugeordnet sein. Die Funktionskontrolleinheit 8 kann den jeweiligen Eintrag 5 der Funktionsregistereinheit 4 bei einem Überschreiten des Ablaufeintrags 18 verändern. Die Schaltungsfunktionen 6 und Schaltkreisbereiche 7 können dazu eingerichtet sein, den jeweiligen Eintrag 5, welcher in der Funktionsregistereinheit 4 gespeichert sein kann, auszulesen und gemäß dem Eintrag 5 aktiv oder inaktiv zu werden. In der Funktionskontrolleinheit 8 können die Profile 19 gespeichert sein, welche die Profileinträge 20 aufweisen können. Die Profileinträge 20 können definieren, welcher der jeweiligen Einträge 5 der Funktionsregistereinheit 4 freigeschaltet ist, wenn das jeweilige Profil 19 aktiviert wird. Einem jeweiligen Profil 19 kann eine Kennung 21 zugeordnet sein. Wird die jeweilige Kennung 21 ausgewählt, kann es vorgesehen sein, dass die Einträge 5 der Funktionsregistereinheit 4 durch die Funktionskontrolleinheit 8 gemäß der Profileinträge 20 geändert werden. Die Funktionskontrolleinheit 8 kann einen Speicher 22 umfassen, in welchem die Einträge 5 der Funktionsregistereinheit 4 vor einer Änderung durch die Funktionskontrolleinheit 8 gespeichert werden können. Es kann vorgesehen sein, dass das Rücksetzsignal 16 entweder über die allgemeine Struktur 23 des integrierten Schaltkreises 3 übertragen wird oder über die dedizierten Leitungen 24, welche die Funktionskontrolleinheit 8 direkt mit dem jeweiligen Schaltkreisbereich 7 verbinden, wobei kein weiterer Schaltkreisbereich 7 an der dedizierten Leitung 24 angeschlossen sein kann.

Entertainmentvorrichtungen für Kraftfahrzeuge werden bevorzugt als Plattformen entwickelt, welche in einer Vielzahl von Fahrzeuglinien eines oder mehrerer Hersteller verwendet werden. Die verschiedenen Fahrzeuglinien in denen die Entertainmentvorrichtungen verwendet werden sollen, können dabei von einem Einstiegssegment bis zu einem Premiumsegment reichen. Für die Zukunft ist es vorgesehen, dass diese genug Hardwareressourcen für die vertretenen Dienste bereitstellen. Dabei ist es vorgesehen, dass ein Spielraum mit einer Reserve auch für Erweiterungen und nachrüstbare Funktionen ausreicht.

Gewöhnlicherweise ist es dabei vorgesehen, eine skalierbare Familie von Steuervorrichtungen zu verwenden. In Abhängigkeit der Ausführungsform werden die Steuervorrichtungen unterschiedlich skaliert, wobei die Varianten vom Einstiegssegment bis zum Premiumsegment unterschiedlich sind. Obwohl sich durch eine Verwendung verschieden skalierter Varianten derselben Steuervorrichtung Vorteile ergeben, wie beispielsweise die Verwendung einer einheitlichen Software für alle Medienvorrichtungen, ergeben sich auch einige Nachteile.

Um das Kostenpotenzial der Systemskalierung zu hebeln, weisen die unterschiedlich skalierten Varianten einer Systemfamilie unterschiedliche Funktionen auf. Sie unterscheiden sich beispielsweise in den Fähigkeiten der Hardware, ihren mechanischen Eigenschaften, ihren Schnittstellen und ihren thermischen Eigenschaften. Damit bestehen weiterhin Aufwendungen und Kosten bei der Bereitstellung unterschiedlich skalierter Systeme einer Systemfamilie.

Um ein System für zukünftige Funktionsentwicklungen, Erweiterungen und für herunterladebare Funktionen vorzubereiten, kann es erforderlich sein, eine Ausführung des Systems mit einer höheren Leistung zu verwenden. Zunächst kann dies zu höheren Kosten für einen Fahrzeughersteller führen, weil der zusätzliche Aufwand für die Reserven nicht vollständig auf den Kaufpreis umgesetzt werden kann. Es kann auch sein, dass der Kunde nicht dazu bereit ist, in weitere Funktionen zu investieren. Der Kraftfahrzeughersteller braucht keine Kosten zu tragen für Hardwarefähigkeiten, welche für eine spezifische Ausführung einer Fahrzeugvariante und/oder für die Lebenszeit des Fahrzeugs nicht nützlich sind. Steuervorrichtungen, welche für unterschiedliche Fahrzeuglinien bzw. für unterschiedliche Varianten des Informationssystems verwendet werden, unterscheiden sich so wenig wie möglich in ihrer Hardware, wodurch eine breitere Wiederverwendung von Software und Hardware über verschiedene skalierte Varianten des Informationssystems verwendet werden können. Es soll eine Möglichkeit bereitgestellt werden, ein kosteneffizientes Upgrade der Hardware für den Fall eines Bedarfs durch den Nutzer bereitzustellen, wenn er neue oder erweiterte Funktionen der Entertainmentvorrichtungen nutzen möchte. Ein Hardwareupdate über Funk soll bereitgestellt werden. Somit kann eine vorteilhafte Situation für den Kunden, den Fahrzeugproduzenten und den Hersteller des Informationssystems erreicht werden. Der Kunde muss nur für das bezahlen was er erhält und kann das Informationssystem aktualisieren, um neue Funktionen oder eine höhere Leistung zu erreichen. Der Kraftfahrzeughersteller kann die Entwicklung unterschiedlicher Varianten so weit wie möglich vermeiden. Er zahlt nur für die Hardwarefunktionen die verkauft und durch den Benutzer bei der Überlassung des Kraftfahrzeugs bezahlt werden. Er hat somit die Möglichkeit die Hardware zu aktualisieren, um neue oder erweiterte Funktionen an den Benutzer zu übermitteln. Der Hersteller der Informationssysteme kann die Entwicklung verschiedener Varianten so weit wie möglich vermeiden. Durch eine Erweiterung des Funktionsumfangs durch Updates der Hardware ergibt sich für den Hersteller eine neue Einnahmequelle.

Die grundlegende Idee lässt sich folgendermaßen beschreiben:
Eine Steuervorrichtung umfasst die Funktionskontrolleinheit. Dabei kann es sich um den einzigen integrierten Schaltkreis der Steuervorrichtung handeln, welcher Einträge in die Funktionsregistereinheit schreiben kann und somit jeweilige Schaltkreise und Funktionen der Steuervorrichtung freischalten kann. Die Funktionskontrolleinheit kann der Art eingerichtet sein, dass nur zulässige Quellen von außerhalb und innerhalb der Steuervorrichtung auf diese zugreifen können. Der Zugriff kann über gesicherte Kommunikation laufen. Es kann vorgesehen sein, dass der Hersteller der Steuervorrichtung die einzige zugelassene Quelle hat, welche auf die Funktionskontrolleinheit zugreifen kann. Um zulässige Quellen identifizieren und die Kommunikation sichern zu können, kann es vorgesehen sein, kryptographische Methode zu verwenden. Die kryptographischen Methoden können auf einem Austausch von Schlüsseldateien oder Blockchain-Technik basieren.

Die Funktionskontrolleinheit kann dazu eingerichtet sein, die Steuervorrichtung beispielsweise mittels einer Chip-ID, welche in einem einmal beschreibbaren Speicher und/oder in einer physikalisch nicht-klonierbaren Funktion hinterlegt sein kann, zu identifizieren. Die Funktionskontrolleinheit kann dazu eingerichtet sein, mit einem Zentralrechner des Herstellers über IT-basierte Kommunikation und einer Netzwerkschnittstelle zu kommunizieren, wobei die Netzwerkschnittstelle kabelgebundene und/oder kabellose Kommunikationsverbindungen mit dem IP-basierten Netzwerk bereitstellen kann. Gewöhnlicherweise wird die Kommunikation durch ein Prozessor bereitgestellt, welcher die Protokollschichten der IP-basierten Kommunikation bereitstellt. Die Funktionskontrolleinheit kann dazu eingerichtet sein, neue Einträge in die Funktionsregistereinheit einzutragen wenn eine Aktualisierung, welche eine Erweiterung oder Einschränkung umfassen kann, durch den Zentralrechner ausgeführt oder eingeleitet wird. Die Funktionskontrolleinheit kann dazu eingerichtet sein, aktuelle Einträge der Funktionsregistereinheit an den Zentralrechner zu übermitteln falls der Zentralrechner dies mittels eines Anfragesignals anfordert.

Die Funktionsregistereinheit der Steuervorrichtung kann die einzige Quelle innerhalb der Steuervorrichtung sein, welche den Funktionsumfang der Steuervorrichtung bestimmen kann. Dies kann bedeuten, dass beispielsweise ein Register zum Bestimmung der maximalen Frequenz von Prozessorkernen direkt durch den Bereich des Schaltkreises ausgelesen werden kann, welcher die maximale Frequenz der Prozessorkerne regelt.

Beispiele für Funktionen welche durch die Funktionsregistereinheit festgelegt werden, können unter anderem sein: eine maximale Frequenz von Prozessorkernen, das Aktivieren oder Deaktivieren einzelner Prozessorkerne, eine maximale Größe von nutzbaren Zwischenspeichern, eine maximale Frequenz von Grafikeinheiten, des Aktivieren oder Deaktivieren von Grafikeinheiten, eine maximale Frequenz von neuronalen Prozessoren, das Aktivieren oder Deaktivieren von neuronalen Prozessoren muss, eine Maximalfrequenz von digitalen Signalprozessoren des Aktivieren oder Deaktivieren von digitalen Signalprozessoren, das Aktivieren oder Deaktivieren von Hardwarebeschleuniger, das Aktivieren oder Deaktivieren von Eingängen und Ausgängen oder die maximal nutzbare Speicherbandbreite.

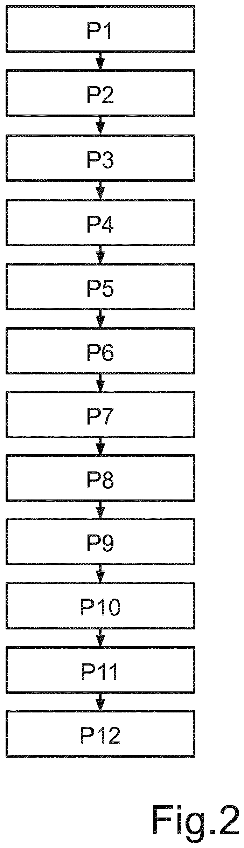

Fig. 2 zeigt wie die Funktionskontrolleinheit verwendet werden kann, um Funktionen freizuschalten.

Das Beispiel beschreibt eine mögliche Verwendung der Steuervorrichtung 1 in einem Kraftfahrzeug, wobei die Steuervorrichtung 1 in einer Infotainmentvorrichtung verwendet werden kann.

In Schritt P1 kann ein Benutzer eine Freischaltung der Schaltungsfunktion 6 und/oder des Schaltungsbereichs 7 des integrierten Schaltkreises 3 mittels einer Benutzereingabe an einer Benutzerschnittstelle der Infotainmentvorrichtung anfordern. Die Freischaltung kann beispielsweise eine Erweiterung einer CPU- Kapazität betreffen.

In Schritt P2 kann ein Anforderungssignal durch die Infotainmentvorrichtung erstellt und an einen Zentralrechner eines Herstellers der Infotainmentvorrichtung oder des Kraftfahrzeugs 2 versandt werden, welches den freizuschaltenden Schaltungsbereich 7 des integrierten Schaltkreises 3 beschreibt.

In Schritt P3 kann der Zentralrechner das Anforderungssignal empfangen und eine Zulässigkeit und Anwendbarkeit der angeforderten Freischaltung überprüfen.

In Schritt P4 kann der Zentralrechner ein Signal an die Quelle 10 übertragen. Die Quelle 10 kann ein zentraler Freischaltungsrechner eines Herstellers der Steuervorrichtung 1 sein. Die Quelle 10 kann das Ansteuerungssignal 9 zur Freischaltung der Schaltungsfunktion 6 und/oder des Schaltungsbereichs 7 des integrierten Schaltkreises 3 erzeugen.

In Schritt P5 kann der Zentralrechner ein vorbestimmtes Kommunikationssignal an die Infotainmentvorrichtung versenden. Bei dem Empfang des Kommunikationssignals durch die Infotainmentvorrichtung wird die in einen Modus gesetzt, in welchem eine direkte Kommunikation zwischen der Steuervorrichtung 1 und der Quelle 10, ermöglicht ist. Befindet sich die Infotainmentvorrichtung in dem Modus, kann die Infotainmentvorrichtung ein Signal an den Zentralrechner senden, welches eine Kommunikationsbereitschaft der Steuervorrichtung 1 signalisiert.

In Schritt P6 kann der Zentralrechner die Quelle 10 mittels eines Signals anweisen, das Ansteuerungssignal 9 an die Steuervorrichtung 1 zu senden. Die Quelle 10 kann das Ansteuerungssignal 9 erzeugen und mittels der kryptographischen Methode signieren.

In Schritt P7 kann die Steuervorrichtung 1 die Signatur im Rahmen der Authentitätsprüfung mittels der kryptographischen Methode überprüfen und somit die Berechtigung der Quelle 10 des Ansteuerungssignals 9 bestätigen. Somit wird eine Ansteuerung der Steuervorrichtung 1 zugelassen und die Quelle 10 kann über eine geschützte Verbindung die Funktionskontrolleinheit 8 mittels des Ansteuerungssignals 9 ansteuern, um eine Erweiterung der CPU-Kapazität freizuschalten.

In Schritt P8 kann die Funktionskontrolleinheit 8 das Ansteuerungssignal 9 verarbeiten und den Eintrag 5 der Funktionsregistereinheit 4, welcher den Freischaltzustand der CPU-Kapazität betrifft, verändern. Hierfür kann es vorgesehen sein, dass ein Ausgang der Funktionskontrolleinheit 8 mit einem Eingang der Funktionsregistereinheit 4 über eine separate Leitung verbunden sein kann.

In Schritt P9 kann die Funktionskontrolleinheit 8 ein Bestätigungssignal an die Quelle 10 versenden, welches mitteilt, dass die Freischaltung der Erweiterung der CPU-Kapazität mittels einer Änderung des zugeordneten Eintrags 5 in der Funktionsregistereinheit 4 durchgeführt wurde.

In Schritt P10 kann die Quelle 10 an den Zentralrechner ein Signal übertragen, um den Versandt des Ansteuerungssignals 9 und die Freischaltung zu bestätigen.

In Schritt P11 kann der Zentralrechner ein Hinweissignal an die Steuervorrichtung 1 senden, um die erfolgte Freischaltung zu bestätigen. Die Steuervorrichtung 1 kann bei dem Empfang des Hinweissignals eine Aufforderung an den Benutzer ausgeben, die Steuervorrichtung 1 zur Aktivierung der Erweiterung neu zu starten.

In Schritt P12 kann der Zentralrechner ein Signal, welches Zahlungsinformationen umfasst, an die Quelle versenden.

Der Hersteller der Steuervorrichtung (im Beispiel das "Infotainmentsystem") und der Hersteller des integrierten Chips (im Beispiel der "Infotainmentsystem SoC") können verschieden sein. Die Erfindung ermöglicht es nun, dass der Hersteller des integrierten Chips die Freigabe von Hardware-Funktionen im integrierten Chip unabhängig vom Hersteller der Steuervorrichtung direkt steuern kann. Das ermöglicht dem Hersteller des integrierten Chips nun von Feature-Upgrades im Feld zu profitieren.

Es kann vorgesehen sein, dass das vorbestimmte Ansteuerungssignal 9 zur Freischaltung der Schaltungsfunktion 6 und/oder des Schaltungsbereichs 7 durch die Quelle 10 an die Steuervorrichtung 1 versandt wird, wenn ein vorbestimmtes Programm durch die Steuervorrichtung 1 von dem Zentralrechner bezogen wird. Alternativ dazu kann die Steuervorrichtung dazu eingerichtet sein, dass Anforderungssignal automatisch an die Quelle 10 zu versenden, wenn das vorbestimmte Programm auf der Steuervorrichtung 1 installiert und/oder gestartet wird. Es kann vorgesehen sein, dass in dem Programm Informationen über benötigte Schaltungsfunktionen 6 und/oder Schaltungsbereiche 7 des integrierten Schaltkreises 3 gespeichert sind, welche für den Betrieb des Programms erforderlich sein können. Es kann auch vorgesehen sein, dass durch die Quelle 10 automatisch ein versenden des vorbestimmten Ansteuerungssignal 9 erfolgt, wenn das Programm durch die Steuervorrichtung 1 von der Quelle 10 heruntergeladen wird.

Es kann vorgesehen sein, dass durch die Quelle 10 automatisch das Ansteuerungssignal 9 zu Deaktivierung des Freischaltzustands der jeweiligen Schaltungsfunktion 6 und/oder des jeweiligen Schaltungsbereichs 7 integrierten Schaltkreises erfolgt, wenn der Ablauftermin und/oder der Ablaufzeitraum des zumindest einen Eintrags 5 der Funktionsregistereinheit 4 abgelaufen ist.

Das Verfahren ist nicht beschränkt auf Ein-Chip-Systeme. Es kann auch für Speichereinheiten oder allgemeine Schaltkreise verwendet werden.

Insgesamt zeigen die Beispiele, wie durch die Erfindung eine nachträgliche Veränderung der Kraftfahrzeugelektronik ermöglicht wird.

## Patentansprüche

1. Verfahren zum Betreiben einer Steuervorrichtung (1) einer Infotainmentvorrichtung eines Kraftfahrzeugs zur Freischaltung von Funktionen, wobei die Steuervorrichtung (1) einen integrierten Schaltkreis (3) umfasst,
**gekennzeichnet durch** folgende Schritte:
- ein Benutzer fordert eine Freischaltung einer Schaltungsfunktion (6) und/oder eines Schaltungsbereichs (7) des integrierten Schaltkreises (3) mittels einer Benutzereingabe an;
- die Infotainmentvorrichtung erstellt ein entsprechendes Anforderungssignal und sendet dieses an einen Zentralrechner eines Herstellers der Infotainmentvorrichtung oder des Kraftfahrzeugs;
- der Zentralrechner empfängt das Anforderungssignal und überprüft eine Zulässigkeit und eine Anwendbarkeit der angeforderten Freischaltung;
- der Zentralrechner überträgt ein Signal an einen zentralen Freischaltungsrechner (10) eines Herstellers der Steuervorrichtung (1);
- der Zentralrechner versendet ein vorbestimmtes Kommunikationssignal an die Infotainmentvorrichtung;
- bei Empfang des Kommunikationssignals durch die Infotainmentvorrichtung wird diese in einen Modus gesetzt, in welchem eine direkte Kommunikation zwischen der Steuervorrichtung (1) und dem zentralen Freischaltrechner (10) ermöglicht ist;
- wenn sich die Infotainmentvorrichtung in diesem Modus befindet, sendet die Infotainmentvorrichtung ein Signal an den Zentralrechner, welches eine Kommunikationsbereitschaft der Steuervorrichtung (1) signalisiert;
- der Zentralrechner weist den zentralen Freischaltungsrechner (10) mittels eines Signals an, ein Ansteuerungssignal an die Steuervorrichtung (1) zu senden;
- der zentrale Freischaltungsrechner (10) des Herstellers der Steuervorrichtung (1) erzeugt ein Ansteuersignal (9) zur angeforderten Freischaltung uns signiert mittels einer kryptographischen Methode und sendet es an die Steuervorrichtung (1);
- die Steuervorrichtung (1) überprüft die Signatur des Ansteuersignals im Rahmen einer Authentitätsprüfung mittels der kryptographischen Methode;
- wenn die Steuervorrichtung (1) die Berechtigung des zentralen Freischaltungsrechners (10) bestätigt, wird eine Ansteuerung der Steuervorrichtung (1) zugelassen;
- der zentrale Freischaltungsrechner (10) steuert über eine geschützte Verbindung eine Funktionskontrolleinheit (8) der Steuervorrichtung (1) mittels des Ansteuerungssignals (9) an;
- die Funktionskontrolleinheit (8) verarbeitet das Ansteuerungssignal (9) und verändert zumindest einen Eintrag (5) betreffend einen Freischaltzustand einer jeweiligen Schaltungsfunktion (6) und/oder eines jeweiligen Schaltungsbereichs (7) des integrierten Schaltkreises (3) einer Funktionsregistereinheit (4);
- durch den integrierten Schaltkreis (3) wird die jeweilige Schaltungsfunktion (6) und/oder der jeweilige Schaltungsbereich (7) gemäß des zumindest einen Eintrags (5) der Funktionsregistereinheit (4) für eine Nutzung freigeschaltet;
- durch die Funktionskontrolleinheit (8) wird ein Bestätigungssignal an den zentralen Freischaltungsrechner (10) versendet, welches mitteilt, dass die Freischaltung für eine Nutzung durch Änderung des zugeordneten Eintrags (5) in der Funktionsregistereinheit (4) durchgeführt wurde;
- der zentrale Freischaltungsrechner (10) überträgt an den Zentralrechner ein Signal, um den Versand des Ansteuerungssignals (9) und die Freischaltung zu bestätigen;
- der Zentralrechner sendet ein Hinweissignal an die Steuervorrichtung (1), um die erfolgte Freischaltung zu bestätigen.

2. Verfahren nach Anspruch 1, **dadurch gekennzeichnet, dass** nur die Funktionskontrolleinheit (8) den zumindest einen Eintrag (5) der Funktionsregistereinheit (4) verändert.

3. Verfahren nach einem der Ansprüche 1 oder 2,
**dadurch gekennzeichnet, dass** die Authentitätsprüfung mittels eines asymmetrischen Schlüsselpaares oder eines Blockchainverfahrens erfolgt.

4. Verfahren nach einem der Ansprüche 1 bis 3,
**dadurch gekennzeichnet, dass**
die Funktionskontrolleinheit (8) das vorbestimmte Ansteuerungssignal (9) über eine Netzwerkschnittstelle (13) der Steuervorrichtung (1) empfängt.

5. Verfahren nach einem der Ansprüche 1 bis 4,
**dadurch gekennzeichnet, dass**
die Funktionskontrolleinheit (8) bei einem Empfang eines Anfragesignals (14) den zumindest einen Eintrag (5) der Funktionsregistereinheit (4) ausliest und als Ausgabesignal (15) versendet.

6. Verfahren nach einem der Ansprüche 1 bis 5,
**dadurch gekennzeichnet, dass**
die Funktionskontrolleinheit (8) ein Rücksetzsignal (16) an den jeweiligen Schaltungsbereich (7) des integrierten Schaltkreises (3) überträgt, um den jeweiligen Schaltungsbereich (7) neu zu starten.

7. Verfahren nach Anspruch 6,
**dadurch gekennzeichnet, dass**
die Steuervorrichtung (1) das Rücksetzsignal (16) über zumindest eine dezidierte Leitung (23) überträgt, , welche die Funktionskontrolleinheit (8) mit nur einem der Schaltungsbereiche (7) des integrierten Schaltkreises (3) verbindet.

8. Verfahren nach einem der Ansprüche 1 bis 7,
**dadurch gekennzeichnet, dass**
die Funktionskontrolleinheit (8) in einem Ablaufregister (17) zumindest einen Ablaufeintrag (18) betreffend einen Ablauftermin oder einen Ablaufzeitraum des zumindest einen Eintrags (5) der Funktionsregistereinheit (4) speichert,
wobei die Funktionskontrolleinheit (8) eine aktuelle Uhrzeit und/oder ein aktuelles Datum ermittelt und bei einem Überschreiten des Ablauftermins oder des Ablaufzeitraums den zumindest einen Eintrag (5) der Funktionsregistereinheit (4) verändert.

9. Verfahren nach einem der Ansprüche 1 bis 8,
**dadurch gekennzeichnet, dass**
die Funktionskontrolleinheit (8) den zumindest einen Eintrag (5) der Funktionsregistereinheit (4) vor einem Verändern in einem Speicher der Funktionskontrolleinheit (8) speichert.

10. Verfahren nach einem der Ansprüche 1 bis 9,
**dadurch gekennzeichnet, dass**
in einem Profilspeicher der Funktionskontrolleinheit (8) einen Profilspeicher zumindest zwei Profile (19) gespeichert werden, wobei das jeweilige Profil (19) zumindest einen Profileintrag (20) umfasst und einer jeweiligen Kennung (21) zugeordnet ist, und
die Funktionskontrolleinheit (8) bei einem Empfang der jeweiligen Kennung (21) den zumindest einen Eintrag (5) der Funktionsregistereinheit (4) gemäß dem zumindest einen Profileintrag (20) des jeweiligen Profils (19) ändert.

## Claims

1. Method for operating a control device (1) of an infotainment device of a motor vehicle for activating functions, wherein the control device (1) comprises an integrated circuit (3),
**characterised by** the following steps:
- a user requests an activation of a circuit function (6) and/or a circuit region (7) of the integrated circuit (3) by means of a user input;
- the infotainment device creates a corresponding request signal and sends this to a central computer of a manufacturer of the infotainment device or the motor vehicle;
- the central computer receives the request signal and checks a permissibility and applicability of the requested activation;
- the central computer transmits a signal to a central activation computer (10) of a manufacturer of the control device (1);
- the central computer sends a predetermined communication signal to the infotainment device;
- on receipt of the communication signal by the infotainment device the latter is set into a mode in which direct communication is possible between the control device (1) and the central activation computer (10);
- when the infotainment device is in this mode the infotainment device sends a signal to the central computer, which signals a communication readiness of the control device (1);
- the central computer directs the central activation computer (10) by means of a signal to send a control signal to the control device (1);
- the central activation computer (10) of the manufacturer of the control device (1) generates a control signal (9) to the requested activation and signed by means of a cryptographic method and sends it to the control device (1);
- the control device (1) checks the signature of the control signal as part of an authenticity check by means of the cryptographic method;
- when the control device (1) confirms the authorisation of the central activation computer (10) a control of the control device (1) is permitted;
- the central activation computer (10) controls via a protected connection a function control unit (8) of the control device (1) by means of the control signal (9);
- the function control unit (8) processes the control signal (9) and changes at least one entry (5) relating to an activation state of a respective circuit function (6) and/or a respective circuit region (7) of the integrated circuit (3) of a function register unit (4);
- by means of the integrated circuit (3) the respective circuit function (6) and/or the respective circuit region (7) is activated for use according to the at least one entry (5) of the function register unit (4);
- by the function control unit (8) an confirmation signal is sent to the central activation computer (10), which communicates that the activation for use has been performed by changing the assigned entry (5) in the function register unit (4);
- the central activation computer (10) transmits a signal to the central computer in order to confirm the sending of the control signal (9) and the activation;
- the central computer sends a reference signal to the control device (1) to confirm the completed activation.

2. Method according to claim 1,
**characterised in that**
only the function control unit (8) changes the at least one entry (5) of the function register unit (4).

3. Method according to any of claims 1 or 2,
**characterised in that**
the authenticity check is performed by means of an asymmetrical key pair or a blockchain method.

4. Method according to any of claims 1 to 3,
**characterised in that**
the function control unit (8) receives the predetermined control signal (9) via a network interface (13) of the control device (1).

5. Method according to any of claims 1 to 4,
**characterised in that**
the function control unit (8) on receiving a query signal (14) reads the at least one entry (5) of the function register unit (4) and sends it as output signal (15).

6. Method according to any of claims 1 to 5,
**characterised in that**
the function control unit (8) transmits a reset signal (16) to the respective circuit region (7) of the integrated circuit (3) in order to restart the respective circuit region (7).

7. Method according to claim 6,
**characterised in that**
the control device (1) transmits the reset signal (16) via at least one dedicated line (23) which connects the function control unit (8) to only one of the circuit regions (7) of the integrated circuit (3).

8. Method according to any of claims 1 to 7, **characterised in that**
the function control unit (8) saves at least one procedure entry (18) relating to an procedure expiry time or a procedure time period of the at least one entry (5) of the function register unit (4) in a procedure register (17),
wherein the function control unit (8) determines a current time and/or a current date and if the procedure expiry time or the procedure time period is exceeded changes the at least one entry (5) of the function register unit (4).

9. Method according to any of claims 1 to 8,
**characterised in that**
the function control unit (8) saves the at least one entry (5) of the function register unit (4) before changing in a memory of the function control unit (8).

10. Method according to any of claims 1 to 9,
**characterised in that**
a profile memory at least two profiles (19) are saved in a profile memory of the function control unit (8), wherein the respective profile (19) comprises at least one profile entry (20) and is assigned to a respective identifier (21) and
the function control unit (8) on receipt of the respective identifier (21) changes the at least one entry (5) of the function register unit (4) according to the at least one profile entry (20) of the respective profile (19).

## Revendications

1. Procédé d'exploitation d'un dispositif de commande (1) d'un dispositif d'infodivertissement d'un véhicule à moteur pour l'activation de fonctions, dans lequel le dispositif de commande (1) comprend un circuit intégré (3),
**caractérisé par** les étapes suivantes :
- un utilisateur demande une activation d'une fonction de circuit (6) et/ou d'une plage de circuit (7) du circuit intégré (3) au moyen d'une entrée utilisateur ;
- le dispositif d'infodivertissement génère un signal de demande correspondant et envoie celui-ci à un ordinateur central d'un fabricant du dispositif d'infodivertissement ou du véhicule à moteur ;
- l'ordinateur central reçoit le signal de demande et vérifie une admissibilité et une applicabilité de l'activation demandée ;
- l'ordinateur central transmet un signal à un ordinateur central d'activation (10) d'un fabricant du dispositif de commande (1) ;
- l'ordinateur central envoie un signal de communication prédéterminé au dispositif d'infodivertissement ;
- à la réception du signal de communication par le dispositif d'infodivertissement, celui-ci est réglé sur un mode dans lequel une communication directe entre le dispositif de commande (1) et l'ordinateur central d'activation (10) est rendue possible ;
- lorsque le dispositif d'infodivertissement est dans ce mode, le dispositif d'infodivertissement envoie un signal à l'ordinateur central, lequel signale que le dispositif de commande (1) est prêt à communiquer ;
- l'ordinateur central ordonne à l'ordinateur central de validation (10), au moyen d'un signal, d'envoyer un signal de déclenchement au dispositif de commande (1) ;
- l'ordinateur central d'activation (10) du fabricant du dispositif de commande (1) génère un signal de déclenchement (9) pour l'activation demandée et le signe en utilisant un procédé cryptographique et l'envoie au dispositif de commande (1) ;
- le dispositif de commande (1) vérifie la signature du signal de déclenchement dans le cadre d'une vérification d'authenticité au moyen du procédé cryptographique ;
- lorsque le dispositif de commande (1) confirme l'autorisation de l'ordinateur central de validation (10), un déclenchement du dispositif de commande (1) est autorisé ;
- l'ordinateur central d'activation (10) commande une unité de contrôle de fonction (8) du dispositif de commande (1) via une connexion protégée au moyen du signal de déclenchement (9) ;
- l'unité de contrôle de fonction (8) traite le signal de déclenchement (9) et modifie au moins une entrée (5) relative à un état d'activation d'une fonction de circuit respective (6) et/ou d'une plage de circuit respective (7) du circuit intégré (3) d'une unité de registre de fonctions (4) ;
- par le circuit intégré (3), la fonction de circuit respective (6) et/ou la plage de circuit respective (7) est activée pour une utilisation conformément à l'au moins une entrée (5) de l'unité de registre de fonctions (4) ;
- par l'unité de commande de fonction (8), un signal de confirmation est envoyé à l'ordinateur central d'activation (10), lequel l'informe que l'activation pour une utilisation a été exécutée en changeant l'entrée affectée (5) dans l'unité de registre de fonctions (4) ;
- l'ordinateur central d'activation (10) transmet un signal à l'ordinateur central pour confirmer l'envoi du signal de déclenchement (9) et l'activation ;
- l'ordinateur central envoie un signal d'indication au dispositif de commande (1) pour confirmer que l'activation a été effectuée.

2. Procédé selon la revendication 1, **caractérisé en ce que** seule l'unité de contrôle de fonction (8) modifie l'au moins une entrée (5) de l'unité de registre de fonctions (4).

3. Procédé selon l'une quelconque des revendications 1 ou 2,
**caractérisé en ce que** la vérification d'authenticité est effectuée au moyen d'une paire de clés asymétriques ou d'un procédé Blockchain.

4. Procédé selon l'une quelconque des revendications 1 à 3,
**caractérisé en ce que**
l'unité de contrôle de fonction (8) reçoit le signal de déclenchement prédéterminé (9) via une interface réseau (13) du dispositif de commande (1).

5. Procédé selon l'une quelconque des revendications 1 à 4,
**caractérisé en ce que**
l'unité de contrôle de fonction (8) lit l'au moins une entrée (5) de l'unité de registre de fonctions (4) lorsqu'un signal de demande (14) est reçu et l'envoie comme signal de sortie (15).

6. Procédé selon l'une quelconque des revendications 1 à 5,
**caractérisé en ce que**
l'unité de contrôle de fonction (8) transmet un signal de réinitialisation (16) à la plage de circuit respective (7) du circuit intégré (3) pour redémarrer la plage de circuit respective (7).

7. Procédé selon la revendication 6,
**caractérisé en ce que**
le dispositif de commande (1) transmet le signal de réinitialisation (16) via au moins une ligne dédiée (23), laquelle relie l'unité de contrôle de fonction (8) à une seule des plages de circuit (7) du circuit intégré (3).

8. Procédé selon l'une quelconque des revendications 1 à 7,
**caractérisé en ce que**
l'unité de contrôle de fonction (8) stocke dans un registre d'expiration (17) au moins une entrée d'expiration (18) concernant une date d'expiration ou une période d'expiration de l'au moins une entrée (5) de l'unité de registre de fonctions (4),
dans lequel l'unité de contrôle de fonction (8) détermine une heure actuelle et/ou une date actuelle et modifie l'au moins une entrée (5) de l'unité de registre de fonctions (4) si la date d'expiration ou la période d'expiration est dépassée.

9. Procédé selon l'une quelconque des revendications 1 à 8,
**caractérisé en ce que**
l'unité de contrôle de fonction (8) stocke l'au moins une entrée (5) de l'unité de registre de fonctions (4) dans une mémoire de l'unité de contrôle de fonction (8) avant de la modifier.

10. Procédé selon l'une quelconque des revendications 1 à 9,
**caractérisé en ce qu'**
au moins deux profils (19) sont stockés dans une mémoire de profils de l'unité de contrôle de fonction (8), dans lequel le profil respectif (19) comprend au moins une entrée de profil (20) et est affecté à un identifiant respectif (21), et
l'unité de contrôle de fonction (8) change l'au moins une entrée (5) de l'unité de registre de fonctions (4) conformément à l'au moins une entrée de profil (20) du profil respectif (19) lorsque l'identifiant respectif (21) est reçu.
